# EUROPÄISCHE PATENTANMELDUNG

(11) **EP 1 369 611 A1**
(43) Veröffentlichungstag der Anmeldung: **10.12.2003**
(21) Anmeldenummer: 02012685.0
(22) Anmeldetag: 07.06.2002
(51) Int. Cl.: F16D 23/14

(54) **Ausrücker mit einer Einrichtung zum Ausgleich von Ungenauigkeiten in einer Reibungskupplung eines Kraftfahrzeugs**

(71) Anmelder: ZF Sachs AG, 97424 Schweinfurt (DE)
(72) Erfinder: Riess, Thomas, Dipl.-Ing. (FH), 97437 Hassfurt (DE); Müller, Karl, Dipl.-Ing. (FH), 97490 Poppenhausen (DE); Lindner, Kurt, 97464 Niederwerrn (DE); Geiger, Martin, Dipl.-Ing. (FH), 97261 Güntersleben (DE)

(57) **Zusammenfassung**

Die Erfindung betrifft einen Ausrücker zur Betätigung einer Reibungskupplung eines Kraftfahrzeuges, als Zusammenbau konzentrisch angeordnet um eine auf einer Getriebewelle angeordneten Führungshülse, umfassend eine Schiebehülse (2a) und ein Ausrücklager (1) wobei Ausrücker sowohl eine erste Einrichtung zum Ausgleich eines Schrägstandes der Mittelachse der Reibungskupplung zu der Mittelachse der Führungshülse als auch eine zweite Einrichtung zum Ausgleich eines Versatzes der vorgenannten Mittelachsen aufweist. Die erste Einrichtung besteht aus zwei zwischen dem Ausrücklager (1) und der Führungshülse über eine Lagerfläche miteinander in Wirkverbindung stehenden Elementen, wobei die Lagerfläche zumindest teilweise einer Kugelform (9a,9b) entspricht. Die zweite Einrichtung besteht aus einer Gleitfläche (7) zwischen dem Ausrücklager und der Schiebehülse in einer Ebene (13) senkrecht zur Achse der Führungshülse, wobei das Ausrücklager auf dieser Gleitfläche gegenüber der Schiebehülse in bestimmten Grenzen aus seiner koaxialen Position zur Führungshülse verschoben werden kann.

## Beschreibung

Die Erfindung betrifft einen Ausrücker zur Betätigung einer Reibungskupplung zwischen einem Verbrennungsmotor und einem Getriebe eines Kraftfahrzeuges, als Zusammenbau konzentrisch angeordnet um eine auf einer Getriebewelle angeordneten Führungshülse, umfassend ein Ausrücklager mit einem Innenring und mit einem Außenring sowie eine Schiebehülse, wobei einer der Ringe, vorzugsweise der Innenring, mit einer Ausrückfeder der Reibungskupplung und der Außenring mit der Schiebehülse in Wirkverbindung steht und wobei der Zusammenbau des Ausrückers sowohl eine erste Einrichtung zum Ausgleich eines Schrägstandes der Mittelachse der Reibungskupplung zu der Mittelachse der Führungshülse und/oder eines Taumelschlages der Ausrückfeder als auch eine zweite Einrichtung zum Ausgleich eines Versatzes der vorgenannten Mittelachsen aufweist.

Mit der DE 199 12 431 A1 ist eine Ausrückvorrichtung für eine Reibungskupplung eines Kraftfahrzeugs bekannt geworden, die aus einem auf einer Schiebehülse angeordneten Ausrücklager und einer zur Reibungskupplung gehörigen, mit dem Ausrücklager in Wirkverbindung stehenden Tellerfeder besteht und die folgenden Merkmale aufweist:
- Zwischen der Tellerfeder und dem Ausrücklager sind zwei zu einander komplementäre Kugelflächensegmente aufweisende Bereiche vorgesehen;
- Beide die Kugelflächensegmente aufweisenden Bereiche sind mittelbar oder unmittelbar an der Tellerfeder vorgesehen;
- Die Kugelflächensegmente bildenden Bereiche sind gegen das Ausrücklager radial verschiebbar.

Die derart durch Kugelflächensegmente verbundenen Bereiche sind teilweise von den Zungen an der Tellerfeder gebildet beziehungsweise zwischen der Tellerfeder und einem als Anpressplatte des Ausrücklagers vorgesehenen Flanschteil angeordneten Ausgleichsring gegeneinander verschiebbar angeordnet.

Komplementäre Kugelflächensegmente wirken als Kugelgelenk für eines der beiden am Kugelgelenk beteiligten Elemente und können einen Taumelschlag - ausgelöst von der als Tellerfeder ausgeführten Kupplungsfeder der Reibungskupplung - sehr wohl dadurch kompensieren, dass sich der vorgenannte Ausgleichsring auf die Lage der Tellerfeder beziehungsweise ihrer Zungen einstellt, indem er durch den Anpressdruck an den Zungen im Kugelgelenk verschwenkt wird. Kommt aber eine weitere Ungenauigkeit der Mittelachse der Reibungskupplung gegenüber der Mittelachse des Ausrückers - beispielsweise ein Versatz der beiden Mittelachsen - hinzu, so genügt es nicht, wenn der Ausgleichsring "nur" dem vorgezeichneten Weg durch das Kugelgelenk folgen kann, vielmehr wäre zur Vermeidung von Verschleiß an der Anlage des Ausgleichsrings an den Zungen eine zusätzliche Exzentrizität des Ausgleichsrings erforderlich.

Der vorgeschlagene Ausrücker weist daher eine erste Einrichtung zum Ausgleich eines Schrägstandes der Mittelachse der Reibungskupplung zu der Mittelachse der Führungshülse auf, die aus zwei zwischen dem Ausrücklager und der Führungshülse über eine Lagerfläche miteinander in Wirkverbindung stehenden Elementen besteht, wobei die Lagerfläche zumindest teilweise einer Kugelform entspricht. Außerdem wird gemäß der vorliegenden Erfindung eine zweite Einrichtung vorgeschlagen, die zum Ausgleich eines Versatzes der Mittelachse der Reibungskupplung zu der Mittelachse der Führungshülse eine Gleitfläche zwischen dem Ausrücklager und der Schiebehülse in einer Ebene senkrecht zur Mittelachse der Führungshülse aufweist, wobei ein mit den Zungen der Kupplungsfeder in Wirkverbindung stehender Ausgleichsring, zumindest aber das Ausrücklager auf dieser Gleitfläche gegenüber der Schiebehülse in bestimmten Grenzen aus seiner koaxialen Position zur Führungshülse verschoben werden kann. Beide Einrichtungen lassen sich in einem Ausrücker vereinigen, wobei das Ausrücklager zweckmäßigerweise durch die Anlage seines drehenden Innenrings an den Zungen der Kupplungsfeder deren Bewegungen mitmachen soll, weshalb die beiden Einrichtungen zwischen dem Ausrücklager und der Führungshülse angeordnet sein müssen. Die Funktion der ersten Einrichtung übernimmt ein Zentrierelement, das um die Führungshülse herum angeordnet ist und mit der Schiebehülse eine gemeinsame kugelförmige Lagerfläche aufweist, wobei das Zentrierelement eine konvexe Kugelform und die Schiebehülse die dazu passende konkave Kugelform aufweist. Es ist in diesem Falle unerheblich, wenn der Radius der kugelförmigen Lagerfläche seinen Ursprung nicht genau auf der Mittelachse der Führungshülse hat, da die Schwenkbewegungen der außen liegenden Schiebehülse gegenüber dem Zentrierelement innerhalb weniger Winkelgrade liegen und dem Konstrukteur die Möglichkeit geben, die kugelförmige Lagerfläche an die Gegebenheiten von Durchmesser und Länge der Schiebehülse anzupassen. Ferner eröffnet die Ausführung der Schiebehülse aus Kunststoff die Möglichkeit,' das ebenfalls aus Kunststoff bestehende Zentrierelement in die für dieses vorgesehene Lage in der Schiebehülse ein zu schnappen, wobei das Zentrierelement entweder über federbewegliche Zungen in die Schiebehülse eingeschnappt wird, oder aber als geschlitzter offener Ring in der Schiebehülse montiert werden kann. Jedenfalls sind für den Einschnappvorgang entweder an dem Zentrierelement oder an der Schiebehülse Vorkehrungen zum gegenseitigen Zusammen-Fügen getroffen.

Die Gleitfläche im vorgenannten Ausrücker liegt wie gesagt in der Ebene senkrecht zur Mittelachse der Führungshülse am Außenring des Ausrücklagers, der sich auf der Gleitfläche der Schiebehülse in bestimmten Grenzen aus seiner koaxialen Position zur Führungshülse verschieben lässt, wobei durch eine federnde Verbindung des Ausrücklagers mit der Schiebehülse durch eine Klammer eine Haftreibung entsteht. An der Gleitfläche der Schiebehülse und/oder an der kugelförmigen Lagerfläche ist ein ringförmiger Anschlag angeordnet, der die Auslenkung des Außenrings aus seiner Mittellage dadurch begrenzt, dass eines der an den beiden Einrichtungen beteiligten Elemente am Anschlag anschlägt.

Eine weitere Variante einer Anordnung einer kugelförmigen Lagerfläche zwischen dem Zentrierelement und der Schiebehülse bietet sich mit einem Zentrierelement an, das als Ring ausgeführt ist und an einer seiner Stirnseiten eine konvexe Kugelform und an seiner gegenüber liegenden Stirnseite die Gleitfläche aufweist. Die Gleitfläche liegt vorzugsweise an dem nach radial innen gezogenen Außenring des Ausrücklagers an, während die Kugelform auf der gegenüber liegenden Seite des Zentrierelements mit der komplementären konkaven Kugelfläche einer Schiebehülse die kugelförmige Lagerfläche bildet. Diese weist einen Radius auf, dessen Ursprung auf der Mittelachse der Führungshülse liegt, jedoch um ein Vielfaches größer ist, als bei der vorbeschriebenen Ausrücker-Varianten. Am Zentrierelement und/oder an der Schiebehülse ist ein Anschlag angeordnet, der verhindern soll, dass die gegeneinander sich verschiebenden Elemente nicht über ein bestimmtes Maß aus ihrer Mittellage hinaus bewegt werden, wobei also das Ausrücklager gegenüber dem Zentrierelement und das Zentrierelement gegenüber der Schiebehülse nur einen beschränkten Weg aus ihrer gemeinsamen Mittelachse ausweichen können, in der sie im Idealfalle liegen, sofern alle an der Funktion beteiligten Elemente fluchten.

Als weitere Variante wird ein Ausrücker vorgeschlagen, der ein Zentrierelement aufweist, das mit einer Schiebehülse die Gleitfläche gemeinsam hat, wobei der Anschlag mit der vorbeschriebenen Funktion an der Schiebehülse angeordnet ist. Das Zentrierelement weist auf seiner der Gleitfläche gegenüber liegenden Stirnseite eine konkave Kugelfläche auf, die mit einer konvexen Kugelfläche an einem Profilring zusammen wirkt, wobei ebenfalls ein Anschlag eine Verschiebung des Profilrings gegenüber dem Zentrierelement verhindert. Der Profilring ist mit dem Außenring des Ausrücklagers verbunden und mit diesem vorzugsweise gefügt, um die Montage zu erleichtern. Der Zusammenhalt der Elemente des Ausrückers erfolgt bekanntermaßen über die Klammer unter Vorspannung, die aber eine Querbeweglichkeit des Profilrings gegen das Zentrierelement und des Zentrierelements gegen die Schiebehülse zulässt.

Was die Ausgestaltung der kugelförmigen Lagerfläche betrifft, so kann ihre Krümmung auch entgegengesetzt zu der oben beschriebenen und in den Zeichnungen dargestellten angeordnet sein. Auf diese Weise entsteht ebenfalls ein Kugelgelenk, das aber vom Innenring des Ausrücklagers gesehen eine andere Kinematik liefert, welche für bestimmte Fälle anwendbar sein dürfte, aber nicht die Stabilität durch die immer vorhandene Rückstellkraft des Ausrücklagers in seine Mittellage aufweist.

Eine vereinfachte Variante eines Ausrückers reagiert auf einen Taumelschlag der Zungen der Kupplungsfeder durch Abrollen der Schiebehülse auf der Führungshülse, wobei der Innendurchmesser dieser Schiebehülse eine ballige Lagerstelle aufweist, die mit der Führungshülse immer entlang einer umlaufenden Linie in Berührung steht. Zum Ausrücklager hin weist die Schiebehülse die Gleitfläche mit dem Anschlag auf, wo der Außenring des Ausrücklagers verschiebbar angeordnet ist und ebenso funktioniert, wie die vorbeschriebenen Ausrücker-Varianten.

Bei einer letzten von mehreren möglichen Varianten sei noch auf die Möglichkeit hingewiesen, das Zentrierelement als Ring mit der Gleitfläche auf der einen Seite und mit einer Schrägfläche auf der anderen Seite aus zu bilden, wobei die Schrägfläche einen Schrägstandswinkel aufweist, der von einer dem maximalen Taumelschlag entsprechenden Größe ist. Die Schrägfläche weist in der Stirnseite einer Schiebehülse eine komplementäre Schrägfläche auf, so dass die Gleitfläche und somit das Ausrücklager in einer ersten Extremlage schlagfrei umläuft, in der anderen Extremlage aber mit einem Schlag umläuft, der dem doppelten Schrägstandswinkel entspricht. Während sich das Zentrierelement durch Verdrehen auf den Schlag der Zungen der Ausrückfeder richtig einstellt, verschiebt sich das Ausrücklager auf der Gleitfläche, wenn ein Versatz der Mittelachse des Ausrücklagers gegenüber der Mittelachse der Schiebehülse ausgeglichen werden muss. Dort ist auch wie in den vorbeschriebenen Varianten im Bereich der Gleitfläche auch einen Anschlag angeordnet, der das Ausweichen des Ausrücklagers gegenüber der Schiebehülse begrenzt.

Die Erfindung hat es sich zur Aufgabe gemacht, einen Ausrücker zur Betätigung einer Ausrückfeder einer Reibungskupplung eines Kraftfahrzeugs zu schaffen, der eine Einrichtung zum Ausgleich eines Schrägstandes der Mittelachse der Reibungskupplung zu der Mittelachse einer Führungshülse und/oder zum Ausgleich eines Versatzes der vorgenannten Mittelachsen und/oder eines Taumelschlages der Ausrückfeder aufweist, ohne nennenswerten Bauraum zu beanspruchen.

Die Lösung der Aufgabe ist im Kennzeichen des Hauptanspruches beschrieben. Ausgestaltungen sind den Unteransprüchen zu entnehmen.

Anhand von Zeichnungen werden mehrere Ausführungsbeispiele eines Ausrückers mit zwei Einrichtungen zum Ausgleich von Laufungenauigkeiten der Mittelachse der Ausrückfeder gegenüber der Mittelachse des Ausrückers erläutert. Es zeigen
- Fig.1: einen Ausrücker mit einer Schiebehülse, die mit einem Zentrierelement über eine gemeinsame Kugelfläche und mit einem Außenring eines Ausrücklagers über eine gemeinsame Gleitfläche zusammen wirkt, im Teilschnitt;
- Fig.2: einen Ausrücker mit einem Zentrierelement, dessen eine Stirnseite die kugelförmige Lagerfläche mit der Schiebehülse und dessen andere Stirnfläche die Gleitfläche mit dem Außenring des Ausrücklagers bildet;
- Fig.3: eine Variante eines Ausrückers gemäß Fig.2 mit einem Zentrierelement, das mit der Schiebehülse die Gleitfläche und mit einem Profilring am Außenring des Ausrücklagers die kugelförmige Lagerfläche gemeinsam hat;
- Fig.4: eine vereinfachte Variante eines Ausrückers ohne Zentrierelement mit der Gleitfläche zwischen dem Außenring und der Schiebehülse mit einer balligen Lagerstelle auf der Führungshülse;
- Fig.5: einen Ausrücker mit einem Zentrierelement, das mit der Schiebehülse eine gemeinsame Schrägfläche und mit dem Außenring die bereits beschriebene Gleitfläche aufweist.

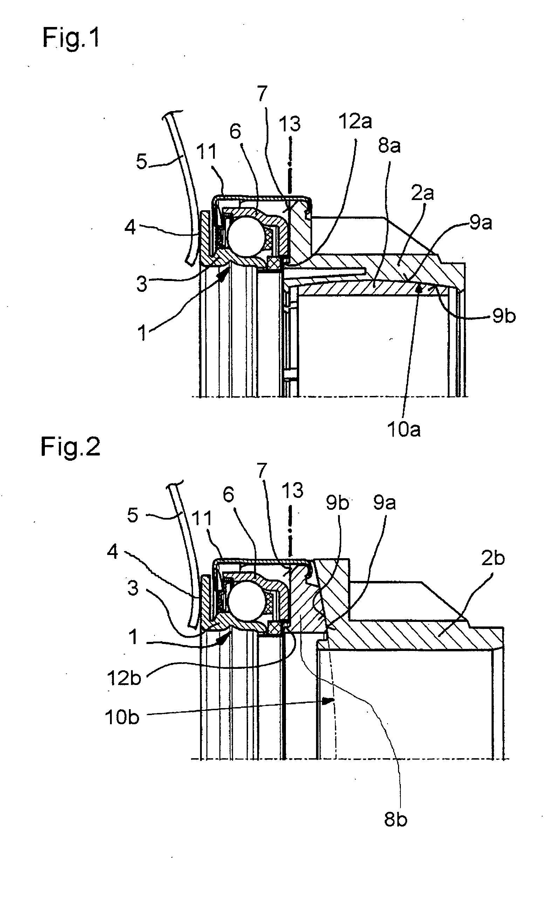

Fig.1 zeigt einen Ausrücker zum Betätigen einer Reibungskupplung über eine Ausrückfeder 5, wobei der Ausrücker ein Ausrücklager 1 aufweist, das ein Kugellager mit einem Innenring 3 und einem Außenring 6 ist und wobei der innenring 3 mit einer Anlagefläche 4 an den Zungen der Ausrückfeder 5 anliegt. Der Außenring 6 hat in einer quer zur Mittelachse des Ausrücklagers 1 verlaufenden Ebene 13 eine Gleitfläche 7 gemeinsam mit einer Schiebehülse 2a, die einen ringförmigen Anschlag 12a für den Außenring des Ausrücklagers 1 aufweist. Die Schiebehülse 2a hat die an ihrem Innendurchmesser eine kugelförmige Lagerfläche mit einem Zentrierelement 8a gemeinsam. Vorzugsweise hat das Zentrierelement 8a eine konvexe Kugelform 9a und die Schiebehülse 2a eine konkave Kugelform 9b mit einem gemeinsamen Radius 10a. Eine Klammer 11 verbindet das Ausrücklager 1 mit der Schiebehülse 2a zu einer Baueinheit.

Gemäß Fig.2 ist ein Ausschnitt eines Ausrückers dargestellt, der zwischen einer Schiebehülse 2b und dem Ausrücklager 1 ein Zentrierelement 8b aufweist, das als Ring ausgeführt ist und an einer seiner Stirnseiten eine konvexe Kugelform 9a und an seiner gegenüber liegenden Stirnseite die Gleitfläche 7 aufweist. Die entsprechende konkave Kugelform 9b ist an einer Stirnseite der Schiebehülse 2b angeformt und bildet die kugelförmige Lagerfläche mit einem Radius 10b. Sowohl an der Gleitfläche 7 als auch an der kugelförmigen Lagerfläche ist ein ringförmiger Anschlag 12b angeordnet, um Auslenkungen des Ausrücklagers 1 gegenüber der Schiebehülse 2b zu begrenzen. Eine Klammer 11 verbindet das Ausrücklager 1 mit der Schiebehülse 2b zu einer Baueinheit.

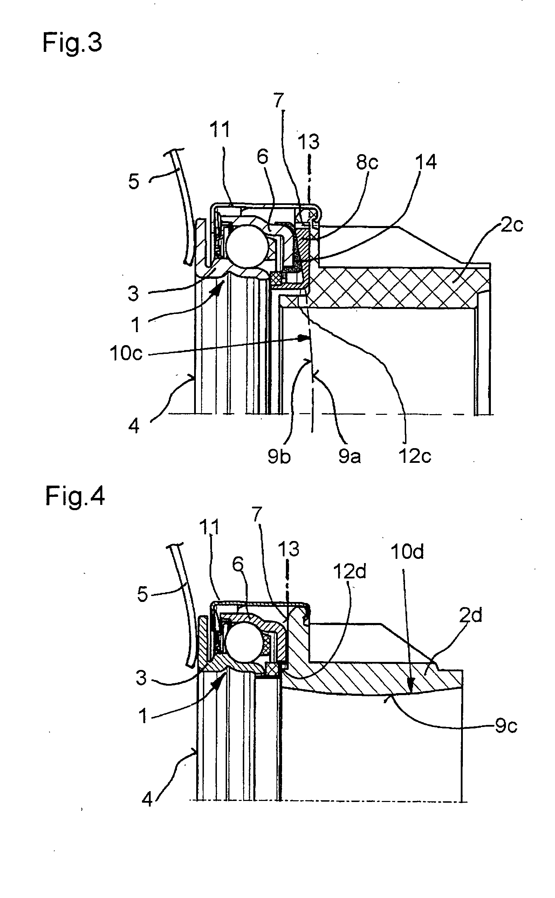

Aus Fig.3 ist ersichtlich, wie ein Zentrierelement 8c zwischen dem Außenring 6 des Ausrücklagers 1 und einer Schiebehülse 2c angeordnet ist: Ein Profilring 14 ist mit dem Außenring 6 des Ausrücklagers 1 verbunden und weist auf seiner gegenüberliegenden Stirnseite eine konvexe Kugelform 9a auf, die mit der konkaven Kugelform 9b an der Stirnseite des Zentrierelements 8c die kugelförmige Lagerstelle mit einem Radius 10c und einem Anschlag 12c bildet. Die andere Stirnseite des Zentrierelements 8c weist in der Ebene 13 die Gleitfläche 7 auf, die ebenfalls einen Anschlag 12c aufweist und mit der Gleitfläche 7 auf der Stirnfläche der Schiebehülse 2c zusammenwirkt.

Fig.4 zeigt, dass ein Ausrücker auch auf einfache Weise auf die Taumelbewegungen vom Ausrücklager 1 reagieren kann. Seine Schiebehülse 2d weist nämlich am Lagerdurchmesser zur Führungshülse hin eine ballige Lagerstelle 9c mit einem Radius 10d auf, die eine eingeschränkte Taumelbewegung des Ausrücklagers 1 zulässt. Die Stirnfläche der Schiebehülse 2d weist in der Ebene 13 die Gleitfläche 7 mit einem Anschlag 12d auf, die mit der Gleitfläche 7 am Außenring 6 des Ausrücklagers 1 zusammen wirkt. Der Innenring 3 liegt mit seiner Anlagefläche 4 an den Zungen der Ausrückfeder 5 an. Eine Klammer 11 verbindet das Ausrücklager 1 mit der Schiebehülse 2d zu einer Baueinheit.

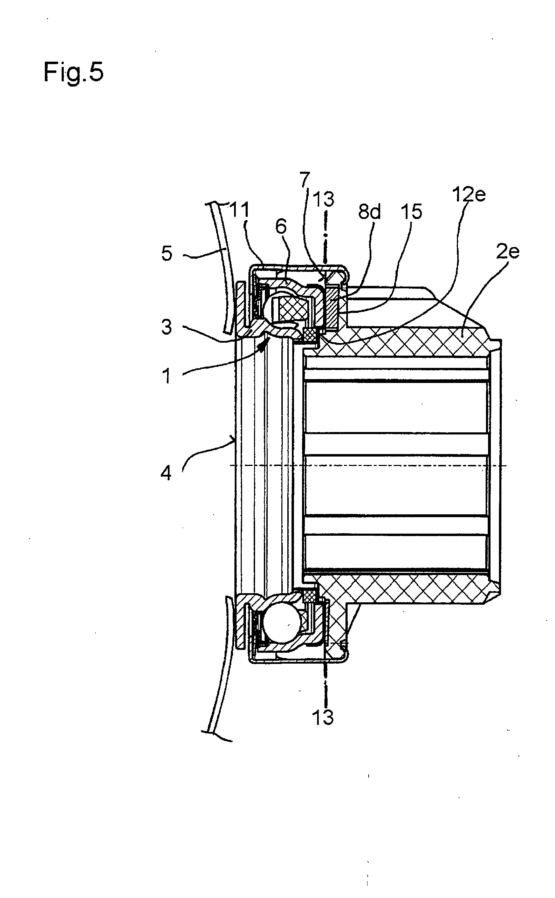

Gemäß Fig.5 ist ein Ausschnitt eines Ausrückers dargestellt, der zwischen einer Schiebehülse 2e und dem Ausrücklager 1 ein Zentrierelement 8d aufweist, das als Ring ausgeführt ist und an einer seiner Stirnseiten die Gleitfläche 7 und an seiner gegenüber liegenden Stirnseite eine Schrägfläche 15 aufweist. Die Schrägfläche 15 weist an der Stirnseite der Schiebehülse 2e eine komplementäre Schrägfläche auf, gegen die sich das Zentrierelement 8d zur Erzeugung eines Taumelwinkels an der Anlagefläche 4 verdrehen kann. An der Gleitfläche 7 der Schiebehülse 2e liegt die Gleitfläche 7 des Außenrings 6 an, wobei an der Schiebehülse 2e ein Anschlag 12e angeformt ist, der das Ausweichen des Außenrings 6 des Ausrücklagers 1 gegenüber der Schiebehülse 2e begrenzt. Eine Klammer 11 verbindet das Ausrücklager 1 mit der Schiebehülse 2e zu einer Baueinheit.

### Bezugszeichenliste

- 1.: Ausrücklager
- 2a,2b,2c,2d,2e.: Schiebehülse
- 3.: Innenring
- 4.: Anlagefläche
- 5.: Ausrückfeder
- 6.: Außenring
- 7.: Gleitfläche
- 8a,8b,8c,8d.: Zentrierelement
- 9a.: konvexe Kugelform
- 9b.: konkave Kugelform
- 9c.: ballige Lagerstelle
- 10a,10b,10c,10d.: Radius
- 11.: Klammer
- 12a,12b,12c,12d,12e.: Anschlag
- 13.: Ebene
- 14.: Profilring
- 15.: Schrägfläche

## Patentansprüche

1. Ausrücker zur Betätigung einer Reibungskupplung zwischen einem Verbrennungsmotor und einem Getriebe eines Kraftfahrzeuges, als Zusammenbau konzentrisch angeordnet um eine auf einer Getriebewelle angeordneten Führungshülse, umfassend ein Ausrücklager mit einem Innenring und mit einem Außenring sowie eine Schiebehülse, wobei einer der Ringe, vorzugsweise der Innenring, mit einer Ausrückfeder der Reibungskupplung und der Außenring mit der Schiebehülse in Wirkverbindung steht und wobei der Zusammenbau des Ausrückers sowohl eine erste Einrichtung zum Ausgleich eines Schrägstandes der Mittelachse der Reibungskupplung zu der Mittelachse der Führungshülse und/oder eines Taumelschlages der Ausrückfeder als auch eine zweite Einrichtung zum Ausgleich eines Versatzes der vorgenannten Mittelachsen aufweist,
**dadurch gekennzeichnet,**
**dass** die erste Einrichtung zum Ausgleich eines Schrägstandes der Mittelachse der Reibungskupplung zu der Mittelachse der Führungshülse aus zwei zwischen dem Ausrücklager (1) und der Führungshülse über eine Lagerfläche miteinander in Wirkverbindung stehenden Elementen besteht, wobei die Lagerfläche zumindest teilweise einer Kugelform entspricht.

2. Ausrücker nach dem Oberbegriff des Anspruchs 1,
**dadurch gekennzeichnet,**
**dass** die zweite Einrichtung zum Ausgleich eines Versatzes der Mittelachse der Reibungskupplung zu der Mittelachse der Führungshülse aus einer Gleitfläche (7) zwischen dem Ausrücklager (1) und der Schiebehülse (2a,2b,2c,2d,2e) in einer Ebene (13) senkrecht zur Mittelachse der Führungshülse besteht, wobei das Ausrücklager (1) auf dieser Gleitfläche (7) gegenüber der Schiebehülse (2a,2b,2c,2d,2e) in bestimmten Grenzen aus seiner koaxialen Position zur Führungshülse verschoben werden kann.

3. Ausrücker nach Anspruch 1 oder 2,
**dadurch gekennzeichnet,**
**dass** die erste Einrichtung und die zweite Einrichtung gleichermaßen im Ausrücker integriert sind.

4. Ausrücker nach Anspruch 1,
**dadurch gekennzeichnet,**
**dass** die Schiebehülse (2a) als eines der Elemente eine konkave Kugelform (9a) im Bereich um die Führungshülse aufweist, wobei das andere Element aus einem Zentrierelement (8a) mit einer äußeren in die konkave Kugelform (9a) passende konvexe Kugelform (9b) besteht.

5. Ausrücker nach Anspruch 1 oder 4,
**dadurch gekennzeichnet,**
**dass** das Zentrierelement (8a) als Ring ausgeführt und in die konkave Kugelform (9a) der Schiebehülse (2a) eingeschnappt ist, wobei für den Einschnappvorgang entweder an dem Zentrierelement (8a) oder an der Schiebehülse (2a) Vorkehrungen zum Zusammen-Fügen getroffen sind.

6. Ausrücker nach einem der Ansprüche 1 bis 5,
**dadurch gekennzeichnet,**
**dass** die kugelförmige Lagerfläche im Längsschnitt gesehen einem Radius (10a.10b,10c,10d) folgt.

7. Ausrücker nach einem der Ansprüche 1 bis 6,
**dadurch gekennzeichnet,**
**dass** das Zentrierelement (8b) als eines der Elemente an einer ersten Stirnfläche eine konvexe Kugelform (9a) aufweist und mit der konkaven Kugelform (9b) der Schiebehülse (2b) zusammenwirkt, während die zweite Stirnfläche parallel zur ersten Stirnfläche in der Ebene (13) die Gleitfläche (7) aufweist.

8. Ausrücker nach einem der Ansprüche 1 bis 7,
**dadurch gekennzeichnet**
**dass** das Zentrierelement (8c) als eines der Elemente mit einer konkaven Kugelform (9b) ausgeführt ist und mit der konvexen Kugelform (9a) eines mit dem Außenring (6) des Ausrücklagers (1) verbundenen Profilrings (14) zusammenwirkt, während das Zentrierelement (8c) parallel dazu in der Ebene (13) die Gleitfläche (7) aufweist.

9. Ausrücker nach einem der vorhergehenden Ansprüche,
**dadurch gekennzeichnet,**
**dass** das Zentrierelement (8b) die kugelförmige Lagerfläche gemeinsam mit der Schiebehülse (2b) hat.

10. Ausrücker nach einem der vorhergehenden Ansprüche,
**dadurch gekennzeichnet,**
**dass** das Zentrierelement (8b) die Gleitfläche (7) gemeinsam mit dem Außenring (6) des Ausrücklagers (1) hat

11. Ausrücker nach einem der vorhergehenden Ansprüche,
**dadurch gekennzeichnet,**
**dass** das Zentrierelement (8c) die kugelförmige Lagerfläche gemeinsam mit dem Außenring (6) des Ausrücklagers (1) beziehungsweise mit einem an diesem anliegenden Profilring (14) hat

12. Ausrücker nach einem der vorhergehenden Ansprüche,
**dadurch gekennzeichnet,**
**dass** das Zentrierelement (8c) die Gleitfläche (7) gemeinsam mir der Schiebehülse (2c) hat

13. Ausrücker nach einem der vorhergehenden Ansprüche,
**dadurch gekennzeichnet,**
**dass** die kugelförmige Lagerfläche zwischen dem Zentrierelement (8b) und der Schiebehülse (2b) beziehungsweise zwischen dem Zentrierelement (8c) und dem Profilring (14) in beide Richtungen, nämlich in der beschriebenen wie auch in der anderen Richtung gekrümmt sein kann.

14. Ausrücker nach einem der Ansprüche 1 bis 13,
**dadurch gekennzeichnet,**
**dass** die Schiebehülse (2d) eine ballige Lagerstelle (9c) gemeinsam mit der Führungshülse hat, während der Außenring (6) des Ausrücklagers (1) mit der Schiebehülse (2d) die Gleitfläche (7) in der Ebene (13) gemeinsam hat.

15. Ausrücker nach einem der vorhergehenden Ansprüche,
**dadurch gekennzeichnet,**
**dass** das Zentrierelement (8d) als Ring mit der Gleitfläche (7) auf der einen Stirnfläche und mit einer Schrägfläche (15) auf der anderen Stirnfläche ausgebildet ist, wobei die Schrägfläche (15) in eine solche in der Schiebehülse (2d) mit dem gleichen Schrägstandswinkel passt.

16. Ausrücker nach einem der vorhergehenden Ansprüche,
**dadurch gekennzeichnet,**
**dass** der Versatz der Mittelachse des Ausrücklagers (1) gegenüber der Mittelachse der Schiebehülse (2a,2b,2c,2d,2e) im Bereich der Gleitfläche (7) und/oder im Bereich der kugelförmigen Lagerfläche durch einen Anschlag (12a,12b,12c,12d,12e) begrenzt ist.
